# EUROPEAN PATENT SPECIFICATION

(11) **EP 3 605 387 B1**
(45) Date of publication and mention of the grant of the patent: **22.12.2021**
(21) Application number: 18798690.6
(22) Date of filing: 28.04.2018
(51) Int. Cl.: G06K 9/00

(54) **OPTICAL FINGERPRINT RECOGNITION ASSEMBLY, DISPLAY APPARATUS AND MOBILE TERMINAL**
OPTISCHE FINGERABDRUCKERKENNUNGSANORDNUNG, ANZEIGEVORRICHTUNG UND MOBILES ENDGERÄT
ENSEMBLE RECONNAISSANCE D'EMPREINTE DIGITALE OPTIQUE, APPAREIL D'AFFICHAGE ET TERMINAL MOBILE

(30) Priority: 12.05.2017 CN 201710342842
(43) Date of publication of application: 05.02.2020
(73) Proprietor: SHENZHEN HEYTAP TECHNOLOGY CORP., LTD., Shenzhen, Guangdong 518057 (CN)
(72) Inventor: YANG, Le, Dongguan Guangdong 523860 (CN); ZHANG, Haiping, Dongguan Guangdong 523860 (CN)
(74) Representative: Manitz Finsterwald Patent- und Rechtsanwaltspartnerschaft mbB
(86) International application number: PCT/CN2018/085214
(87) International publication number: WO 2018/205867

(56) References cited:
- EP-A1- 2 131 322
- EP-A1- 3 115 934
- WO-A1-2016/154378
- CN-A- 1 493 255
- CN-A- 101 201 896
- CN-A- 105 893 932
- CN-A- 107 038 434
- US-A1- 2016 240 575
- TABEI JUNICHI ET AL: "Epoxy molding compound for fingerprint sensor", 2016 INTERNATIONAL CONFERENCE ON ELECTRONICS PACKAGING (ICEP), THE JAPAN INSTITUTE OF ELECTRONICS PACKAGING, 20 April 2016 (2016-04-20), pages 553-556, XP032909676, DOI: 10.1109/ICEP.2016.7486888 [retrieved on 2016-06-07]

## Description

### TECHNICAL FIELD

The present disclosure relates to the technology field of electronic apparatuses, and more particularly to an optical fingerprint recognition assembly, a display device, and a terminal.

### BACKGROUND

With the development of technology, at present, mobile phones and tablet computers generally have a fingerprint unlocking function. Existing fingerprint recognition devices generally include capacitive fingerprint recognition devices, optical fingerprint recognition devices, and thermal sensing fingerprint recognition devices. The optical fingerprint recognition devices are widely used since the optical fingerprint recognition devices are reliable and cheap.

For a terminal having the optical fingerprint recognition device, an organic light-emitting layer of a display screen of the terminal is used for emitting lights for fingerprint collection. It is found that the display screen provided with the optical fingerprint recognition device has a short service life due to that the display screen needs to frequently emit lights for frequent fingerprint unlocking. Accordingly, usage of the terminal may be affected.

### SUMMARY

The present disclosure provides an optical fingerprint recognition assembly in a display screen of a display device, capable of independently emitting lights.

In order to solve the above technical problem, the present disclosure provides an optical fingerprint recognition assembly. The optical fingerprint recognition assembly includes a light source and a fingerprint module. The fingerprint module includes a prism, an image sensor, and a fingerprint controller. The prism, the image sensor, and the fingerprint controller are encapsulated together. The light source is disposed outside the fingerprint module and configured to emit lights reaching the fingerprint touch surface where a fingerprint to be recognized exists. Total reflection occurs when the lights reach the fingerprint to be recognized. Lights formed via the total reflection pass through the prism and reach the image sensor. The image sensor acquires a fingerprint image according to the lights formed via the total reflection. The fingerprint controller recognizes the fingerprint image received from the image sensor.

The present disclosure further provides a display device including a display screen and an optical fingerprint recognition assembly attached to the display screen. The optical fingerprint recognition assembly includes a light source and a fingerprint module. The fingerprint module includes a prism, an image sensor, and a fingerprint controller. The prism, the image sensor, and the fingerprint controller are encapsulated together. The light source is disposed outside the fingerprint module and configured to emit lights reaching the fingerprint touch surface where a fingerprint to be recognized exists. Total reflection occurs when the lights reach the fingerprint to be recognized. Lights formed via the total reflection pass through the prism and reach the image sensor. The image sensor acquires a fingerprint image according to the lights formed via the total reflection. The fingerprint controller recognizes the fingerprint image received from the image sensor.

The present disclosure further provides a terminal including a display device. The display device includes a display screen and an optical fingerprint recognition assembly attached to the display screen The optical fingerprint recognition assembly includes a light source and a fingerprint module. The fingerprint module includes a prism, an image sensor, and a fingerprint controller. The prism, the image sensor, and the fingerprint controller are encapsulated together. The prism includes a fingerprint touch surface configured to receive a fingerprint. The light source is disposed outside the fingerprint module and configured to emit lights reaching the fingerprint touch surface where a fingerprint to be recognized exists. Total reflection occurs when the lights reach the fingerprint to be recognized. Lights formed via the total reflection pass through the prism and reach the image sensor. The image sensor acquires a fingerprint image according to the lights formed via the total reflection. The fingerprint controller recognizes the fingerprint image received from the image sensor.

The optical fingerprint recognition assembly provided by the present disclosure includes the light source and the fingerprint module. The optical fingerprint recognition assembly may independently emit lights. When being applied to the display device or the terminal, the optical fingerprint recognition assembly may independently emit lights, rather than the optical fingerprint recognition assembly is illuminated via other devices.

For applying the optical fingerprint recognition assembly, service life of the display screen of the display device and the terminal provided by the present disclosure may be prolonged.

### BRIEF DESCRIPTION OF THE DRAWINGS

To better illustrate the technical solutions of the present disclosure, the c will briefly illustrate the accompanying drawings described in the embodiments. Obviously, the following described accompanying drawings merely illustrate some embodiments of the present disclosure. Those skilled in the art may obtain other accompanying drawings according to the described accompanying drawings without creative efforts.
FIG. 1 is a schematic view of an optical fingerprint recognition assembly according to the present disclosure which is not covered by the scope of the claims.
FIG. 2 is a schematic view illustrating an arrangement of a number of light sources of the optical fingerprint recognition assembly illustrated in FIG. 1.
FIG. 3 is a schematic view illustrating another arrangement of the number of light sources of the optical fingerprint recognition assembly illustrated in FIG. 1.
FIG. 4 is a schematic view of the optical fingerprint recognition assembly illustrated in FIG. 1, illustrating that the optical fingerprint recognition assembly is provided with a flexible circuit board.
FIG. 5 is a schematic view of a terminal according to an embodiment of the present disclosure.
FIG. 6 is a cross-sectional view of the terminal illustrated in FIG. 5 taken along a line I-I.

### DETAILED DESCRIPTION

The technical solutions of embodiments of the present disclosure will be described clearly and completely in combination with the accompanying drawings of the embodiments of the present disclosure.

A terminal 300 according to the present disclosure, and which is not covered by the scope of the claims, may be any apparatus having communication and storage functions such as a smart device having a network function. The smart device may be a tablet computer, a mobile phone, an e-reader, a remote controller, a personal computer (PC), a notebook computer, an in-vehicle device, an internet TV, a wearable device, or the like.

An optical fingerprint recognition assembly includes a light source and a fingerprint module. The fingerprint module includes a prism, an image sensor, and a fingerprint controller. The prism, the image sensor, and the fingerprint controller are encapsulated together. The light source is disposed outside the fingerprint module and configured to emit lights reaching the fingerprint touch surface where a fingerprint to be recognized exists. Total reflection occurs when the lights reach the fingerprint to be recognized. Lights formed via the total reflection pass through the prism and reach the image sensor. The image sensor acquires a fingerprint image according to the lights formed via the total reflection. The fingerprint controller recognizes the fingerprint image received from the image sensor.

An angle of incidence formed by the light emitted from the light source and a line perpendicular to the fingerprint touch surface ranges from 0 degree to 8 degrees.

The light source surrounds the fingerprint module.

The light source includes a number of light emitting diodes (LEDs). The LEDs surround the fingerprint module and are evenly spaced apart from each other.

The fingerprint module has a cross section including two opposite long sides and two opposite short sides. The two short sides are connected between the two long sides.

The light source includes six LEDs. Each of the long sides is provided with two of the LEDs. Each of the short sides is provided with one of the LEDs.

The fingerprint module has a cross section in a round shape.

The light source includes four LEDs evenly disposed at a side surface of the fingerprint module.

The light source is a number of infrared light sources. The infrared light sources surround the fingerprint module and are evenly spaced apart from each other.

The fingerprint module has a cross section including two opposite long sides and two opposite short sides. The two short sides are connected between the two long sides.

The optical fingerprint recognition assembly further includes a substrate. The light sources and the fingerprint module both are encapsulated on the substrate.

The optical fingerprint recognition assembly further includes a flexible circuit board and a substrate disposed on the flexible circuit board. The fingerprint module is encapsulated on the substrate, and the light source is disposed on the flexible circuit board.

The prism, the image sensor, and the fingerprint controller are encapsulated via an epoxy molding compound plastic to form the fingerprint module.

A display device includes a display screen and an optical fingerprint recognition assembly attached to the display screen. The optical fingerprint recognition assembly includes a light source and a fingerprint module. The fingerprint module includes a prism, an image sensor, and a fingerprint controller. The prism, the image sensor, and the fingerprint controller are encapsulated together. The light source is disposed outside the fingerprint module and configured to emit lights reaching the fingerprint touch surface where a fingerprint to be recognized exists. Total reflection occurs when the lights reach the fingerprint to be recognized. Lights formed via the total reflection pass through the prism and reach the image sensor. The image sensor acquires a fingerprint image according to the lights formed via the total reflection. The fingerprint controller recognizes the fingerprint image received from the image sensor.

The display screen includes a rear surface facing away from the display screen. The rear surface defines a recess. The optical fingerprint recognition assembly is received in the recess defined in the rear surface.

An orthographic projection of the recess on the display screen falls in a display area of the display screen for displaying images.

The rear surface is provided with a light-shielding layer made of light-shielding material.

A terminal includes a display device. The display device includes a display screen and an optical fingerprint recognition assembly attached to the display screen. The optical fingerprint recognition assembly includes a light source and a fingerprint module. The fingerprint module includes a prism, an image sensor, and a fingerprint controller. The prism, the image sensor, and the fingerprint controller are encapsulated together. The light source is disposed outside the fingerprint module and configured to emit lights reaching the fingerprint touch surface where a fingerprint to be recognized exists. Total reflection occurs when the lights reach the fingerprint to be recognized. Lights formed via the total reflection pass through the prism and reach the image sensor. The image sensor acquires a fingerprint image according to the lights formed via the total reflection. The fingerprint controller recognizes the fingerprint image received from the image sensor.

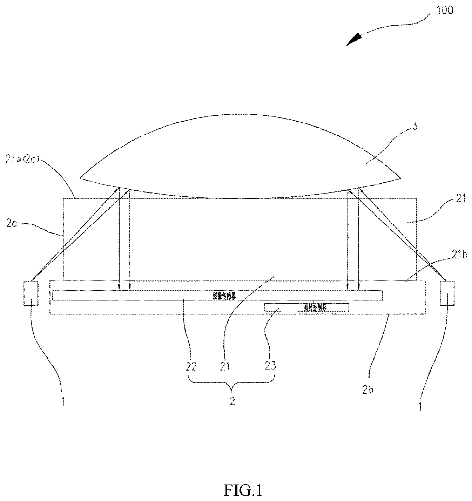

As illustrated in FIG. 1, an optical fingerprint recognition assembly 100 not covered by the scope of the claims is provided. The optical fingerprint recognition assembly 100 includes a number of light sources 1 and a fingerprint module 2. The light sources 1 are configured to emit lights for fingerprint recognition. The light sources 1 cooperate with the fingerprint module 2 to perform the fingerprint recognition as follows. Lights emitted from the light sources 1 reach a fingerprint touch surface 21a of a prism 21. Total reflection occurs when the lights reach the fingerprint. Lights formed via the total reflection pass through the prism 21 and reach an image sensor 22. The image sensor 22 acquires a fingerprint image according to the lights formed via the total reflection. A fingerprint controller 23 recognizes the fingerprint image received from the image sensor 22.

As illustrated in FIG. 1, the fingerprint module 2 includes theprism 21, the image sensor 22, and the fingerprint controller 23. The prism 21, the image sensor 22, and the fingerprint controller 23 of the fingerprint module 2 are encapsulated together. In this way, the fingerprint module 2 may be in a block shape as whole. The fingerprint module 2 includes an upper surface 2a, a lower surface 2b opposite the upper surface 2a, and a side surface 2c connected between the upper surface 2a and the lower surface 2b. A distance between the upper surface 2a and the lower surface 2b of the fingerprint module 2 is defined as a height of the fingerprint module 2. A distance between two positions of the side surface 2c of the fingerprint module 2 is defined as a width of the fingerprint module 2, where the distance between the two positions is the largest among distances between any other positions of the side surface 2c.

It can be understood that, the prism 21, the image sensor 22, and the fingerprint controller 23 may be encapsulated together via an epoxy molding compound (EMC) plastic. A process of encapsulating the fingerprint module 2 may not affect normal operations of optical components, such as the prism 21.

The prism 21 includes the fingerprint touch surface 21a and an incident light surface 21b configured to allow the lights formed via total reflection to pass through. The fingerprint touch surface 21a is the upper surface 2a of the fingerprint module 2. The fingerprint recognition is performed when the fingerprint touch surface 21a of the prism 21 is pressed by a user's finger portion 3 containing a fingerprint. The image sensor 22 and the fingerprint controller 23 are disposed below the prism 21, that is, the image sensor 22 and the fingerprint controller 23 are close to the incident light surface 21b of the fingerprint module 2. In this way, the image sensor 22 may acquire lights reflected to the incident light surface 21b of the prism 21 and convert optical signals into electrical signals. The electrical signals are transmitted to the fingerprint controller 23 for processing. The image sensor 22 and the fingerprint controller 23 form the lower surface 2b of the fingerprint module 2. It can be understood that, the lower surface 2b of the fingerprint module is a surface facing away from the upper surface 2a.

As illustrated in FIG. 1, the light sources 1 are disposed outside the fingerprint module 2. The lights emitted from the light sources 1 may reach the fingerprint touch surface 21 of the prism 21 and be used for fingerprint recognition, that is, the optical fingerprint recognition assembly 100 may independently emit lights. When being applied to a display device or a terminal, the optical fingerprint recognition assembly 100 may emit lights independently, rather than that the optical fingerprint recognition assembly 100 is illuminated via other devices.

It can be understood that, an angle of incidence formed by the light emitted from the light source 1 and a line perpendicular to the fingerprint touch surface 21a ranges from 0 degree to 8 degrees. When the angle of incidence falls in the range from 0 degree to 8 degrees, it can be ensured that the light emitted from the light source 1 may be well reflected by the fingerprint touch surface 21a where the fingerprint to be recognized exists, such that the image sensor 22 can acquire an accurate fingerprint image, thereby improving an accuracy of fingerprint recognition.

For a further improvement, as illustrated in FIG. 1, the light sources 1 surround the fingerprint module 2. For example, the light sources 1 surround the side surface 2c of the fingerprint module 2 to decrease the height of the optical fingerprint recognition assembly 100, such that when the optical fingerprint recognition assembly 100 is applied to a display device or a terminal, the display device or the terminal can be made to be thin.

It can be understood that, the light sources 1 may include a number of light emitting diodes (LEDs). The LEDs surround the fingerprint module 2 and are evenly spaced apart from each other. In an alternative embodiment, the light sources 1 may be a number of infrared light sources. The infrared light sources surround the fingerprint module 2 and are evenly spaced apart from each other.

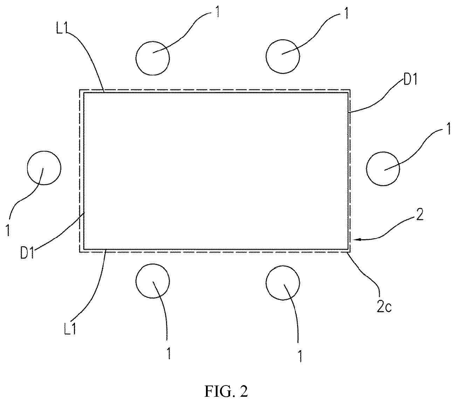

In one embodiment, as illustrated in FIG. 2, the fingerprint module 2 has a cross section in a rectangular shape, that is, the cross section of the fingerprint module 2 includes two opposite long sides L1 and two opposite short sides D1. The two short sides D1 are connected to the two long sides L1 and located between the two long sides L1. The light sources 1 may be six LEDs or six infrared light sources. Each of the long sides L1 is provided with two LEDs or two infrared light sources. Each of the short sides D1 is provided with one LED or one infrared light source. The arrangement of the light sources 1 may ensure that the fingerprint touch surface 21a may be illuminated with sufficient lights, which is beneficial for the fingerprint recognition.

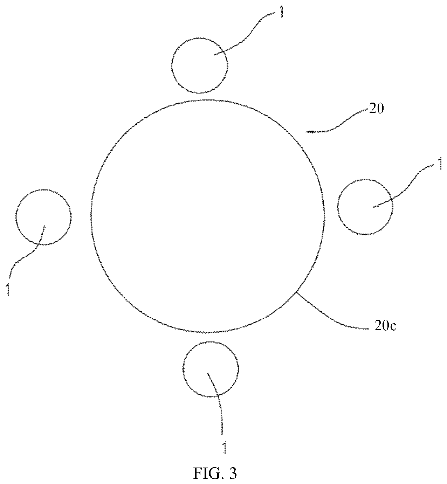

In another embodiment, as illustrated in FIG. 3, a fingerprint module20 in this embodiment is similar to that in the FIG. 2 and FIG. 3 except that the fingerprint module 20 may have a cross section in a round shape. The light sources 1 may be four LEDs or four infrared light sources evenly disposed at a side surface 20c of the fingerprint module 20. The arrangement of the light sources 1 may ensure that a fingerprint touch surface of a prism of the fingerprint module 20 may be illuminated with sufficient lights, which is beneficial for the fingerprint recognition.

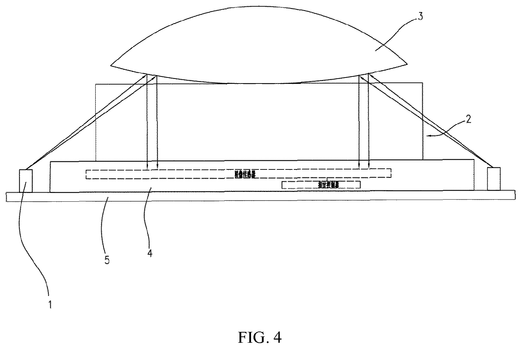

Furthermore, as illustrated in FIG. 1, the optical fingerprint recognition assembly 100 further includes a substrate 4. The light sources 1 and the fingerprint module 2 both are encapsulated on the substrate 4. The substrate 4 is a rigid, and can support the light sources 1 and the fingerprint module 2. The LEDs or the infrared light sources 1 surround the fingerprint module 2, and the light sources 1 are encapsulated on the substrate 4 via the epoxy molding compound (EMC) plastic, that is, the light sources 1 and the fingerprint module 2 both are encapsulated on the substrate 4. When using the optical fingerprint recognition assembly 100, the substrate 4 is mounted in a corresponding location of the display device or the terminal. Of course, in other embodiments, as illustrated in FIG. 4, the optical fingerprint recognition assembly 100 further includes a flexible circuit board 5 and the substrate 4 disposed on the flexible circuit board 5. The fingerprint module 2 is encapsulated on the substrate 4. The light sources 1 are disposed on the flexible circuit board 5. The light sources 1 can be fixed without encapsulating both the fingerprint module 2 and the light sources 1 on the substrate 4.

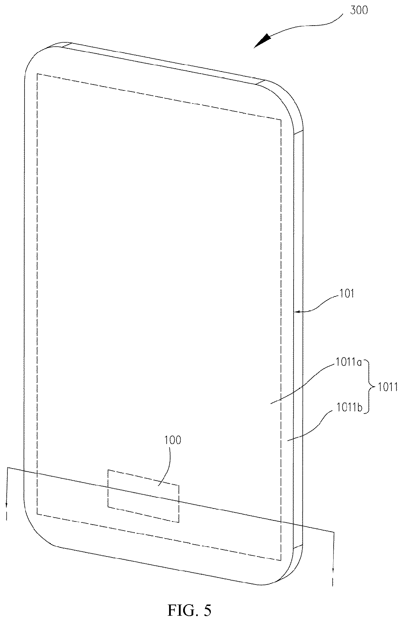

As illustrated in FIG. 5, a terminal 300 is provided. The terminal 300 includes a display device 200, which is an embodiment covered by the claims, The display device 200 includes a display screen 101 and the optical fingerprint recognition assembly 100. For details of the optical fingerprint recognition assembly 100, reference may be made to the present disclosure. For the terminal 300, by means of the optical fingerprint recognition assembly 100 as described above, the display screen 101 does not need to emit lights, and thus service life of the display screen 101 is prolonged.

In the embodiment, as illustrated in FIG. 5, the display screen 101 includes a display surface 1011 and a rear surface 1012 opposite the display surface 1011. The display surface 1011 includes a display area 1011a configured to display images and a non-display area 1011b incapable of displaying images. The rear surface 1012 is opposite the display surface 1011. The rear surface 1012 is provided with a light-shielding layer made of light-shielding material. Since the light-shielding layer is thin, a shape of the rear surface 1012 may be substantially the same as that of the light-shielding layer. It can be understood that, the light-shielding material may be foams. Since the rear surface 102 blocks lights, traces in the display screen 101 may be invisible when the display area 1011a does not display images, thereby further improving display performance of the display device 200.

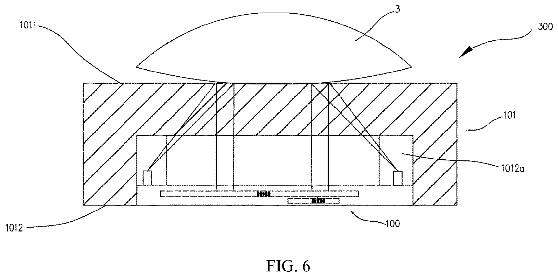

As illustrated in FIG. 6, the rear surface 1012 defines a recess 1012a. The optical fingerprint recognition assembly 100 is received in the recess 1012a defined in the rear surface 1012. The recess 1012a is defined in the rear surface 1012 and the optical fingerprint recognition assembly 100 is received in the recess 1012a, that is, the optical fingerprint recognition assembly 100 is disposed in the display device 200 of the terminal 300. As a result, the optical fingerprint recognition assembly 100 does not occupy part of the display surface 1011 of the display screen 101.

The recess 1012a is defined in the light-shielding layer 1012a, that is, a portion of the display screen 101 corresponding to the recess 1012a is not provided with shielding materials, and thus the lights from the optical fingerprint recognition assembly 100 can pass through the display screen 101. The light sources 1 and the fingerprint module 2 both are received in the recess 1012a. The recess 1012a is substantially similar to the optical fingerprint recognition assembly in shape. For example, when the cross section of the optical fingerprint recognition assembly 100 is in a rectangular shape, the recess 1012a is also in a rectangular shape; when the cross section of the optical fingerprint recognition assembly 100 is in a round shape, the recess 1012a is also in a round shape.

Furthermore, as illustrated in FIG. 5 and FIG. 6, an orthographic projection of the recess 1012a on the display screen 101 falls in the display area 1011a of the display screen 101 for displaying images. The orthographic projection of the recess 1012a on the display screen 101 falls in the display area 1011a, and accordingly the optical fingerprint recognition assembly 100 does not occupy part of the non-display area 1011b of the display device 200 of the terminal 300. Therefore, a screen ratio of the display device 200 of the terminal 300 increases.

When using the terminal 300, the optical fingerprint recognition assembly 100 is mounted in the recess 1012a of the display screen 101. The finger portion 3 containing the fingerprint presses on a portion of the display area 1011a directly facing the recess 1012a, where the fingerprint is referred as a fingerprint to be recognized. In response to press of the finger portion 3 containing the fingerprint, the light sources 1 of the optical fingerprint recognition assembly 100 emit lights. The lights reach the surface 21a of the prism 21 and further reach the display screen 101 above the prism 21. When the lights from the light sources 1 reach the fingerprint, the total reflection occurs. The lights formed via the total reflection pass through the prism 21 and reach the image sensor 22. The image sensor 22 acquires the fingerprint image according to the lights formed via total reflection. The fingerprint controller 23 recognizes the fingerprint image transmitted by the image sensor 22. As such, the fingerprint recognition is performed.

## Claims

1. A display device (200) comprising:
a display screen (101) having a display surface (1011) and a rear surface (1012) opposite the display surface (1011), wherein the display surface (1011) has a display area (1011a), the rear surface (1012) defines a recess (1012a), and an orthographic projection of the recess (1012a) on the display screen (101) falls in the display area (1011a); and
an optical fingerprint recognition assembly (100) received in the recess (1012a) of the rear surface (1012) and comprising:
a fingerprint module (2) comprising a prism (21), an image sensor (22), and a fingerprint controller (23), wherein the prism (21), the image sensor (22), and the fingerprint controller (23) are encapsulated together;
a light source (1) disposed outside the fingerprint module (2), wherein the light source (1) is configured to emit lights reaching an upper surface of the prism, and further reaching the display surface above the prism (1011), and total reflection occurs when the lights reach a fingerprint to be recognized on the display surface (1011), and wherein lights formed via the total reflection pass through the prism (21) and reach the image sensor (22); the image sensor (23) being configured to acquire a fingerprint image according to the lights formed via the total reflection; the fingerprint controller (23) being configured to recognize the fingerprint image received from the image sensor (23);
a flexible circuit board (5); and
a substrate (4) disposed on the flexible circuit board (5), wherein the fingerprint module (2) is encapsulated on the substrate (4), and the light source (1) is disposed on the flexible circuit board (5).

2. The display device (200) of claim 1, wherein an angle of incidence formed by the light emitted from the light source (1) and a line perpendicular to the fingerprint touch surface (21a) ranges from 0 degree to 8 degrees.

3. The display device (200) of claim 1 or claim 2, wherein the light source (1) surrounds the fingerprint module (2).

4. The display device (200) of any one of claim 1 to claim 3, wherein the light source (1) comprises a plurality of light emitting diodes (LEDs), wherein the plurality of LEDs surround the fingerprint module (2) and are evenly spaced apart from each other.

5. The display device (200) of claim 4, wherein the fingerprint module (2) has a cross section in a rectangular shape, wherein the cross section of the fingerprint module comprises two opposite long sides (L1) and two opposite short sides (D1), wherein the two short sides (D1) are connected between the two long sides (L1).

6. The display device (200) of claim 5, wherein the light source (1) comprises six LEDs, wherein each of the long sides (L1) is provided with two of the LEDs, and each of the short sides (D1) is provided with one of the LEDs.

7. The display device (200) of claim 4, wherein the fingerprint module (2) has a cross section in a round shape.

8. The display device (200) of claim 7, wherein the light source (1) comprises four LEDs evenly disposed at a side surface of the fingerprint module (2).

9. The display device (200) of any one of claim 1 to claim 3, wherein the light source (1) is a plurality of infrared light sources, wherein the plurality of infrared light sources surround the fingerprint module (2) and are evenly spaced apart from each other.

10. The display device (200) of claim 9, wherein the fingerprint module (2) has a cross section, wherein the cross section comprises two opposite long sides (L1) and two opposite short sides (D1), wherein the two short sides (D1) are connected between the two long sides (L1).

11. The display device (200) of claim 10, wherein the light source (1) comprises six infrared light sources, wherein each of the long sides (L1) is provided with two of the infrared light sources, and each of the short sides (D1) is provided with one of the infrared light sources.

12. The display device (200) of any one of claim 1 to claim 11, wherein the prism (21), the image sensor (22), and the fingerprint controller (23) are encapsulated via an epoxy molding compound plastic to form the fingerprint module (2).

## Patentansprüche

1. Anzeigevorrichtung (200), umfassend:
einen Anzeigebildschirm (101) mit einer Anzeigefläche (1011) und einer der Anzeigefläche (1011) gegenüberliegenden Rückfläche (1012), wobei die Anzeigefläche (1011) einen Anzeigebereich (1011a) aufweist, die Rückfläche (1012) eine Aussparung (1012a) definiert und eine orthographische Projektion der Aussparung (1012a) auf den Anzeigebildschirm (101) im Anzeigebereich (1011a) liegt; und
eine optische Fingerabdruckerkennungsanordnung (100), die in der Aussparung (1012a) der Rückfläche (1012) aufgenommen ist und folgende Elemente umfasst:
ein Fingerabdruckmodul (2), umfassend ein Prisma (21), einen Bildsensor (22) und eine Fingerabdrucksteuerung (23), wobei das Prisma (21), der Bildsensor (22) und die Fingerabdrucksteuerung (23) zusammen eingekapselt sind;
eine Lichtquelle (1), die außerhalb des Fingerabdruckmoduls (2) eingerichtet ist, wobei die Lichtquelle (1) dafür ausgelegt ist, Licht zu emittieren, das eine obere Fläche des Prismas erreicht und weiter die Anzeigefläche oberhalb des Prismas (1011) erreicht, und Totalreflexion auftritt, wenn das Licht einen zu erkennenden Fingerabdruck auf der Anzeigefläche (1011) erreicht, und wobei Licht, das durch die Totalreflexion gebildet wird, das Prisma (21) durchläuft und den Bildsensor (22) erreicht; wobei der Bildsensor (23) dafür ausgelegt ist, ein Fingerabdruckbild gemäß dem Licht, das durch die Totalreflexion gebildet wird, zu erfassen;
wobei die Fingerabdrucksteuerung (23) dafür ausgelegt ist, das vom Bildsensor (23) empfangene Fingerabdruckbild zu erkennen;
eine flexible Leiterplatte (5); und
ein Substrat (4), das auf der flexiblen Leiterplatte (5) eingerichtet ist, wobei das Fingerabdruckmodul (2) auf dem Substrat (4) eingekapselt ist und die Lichtquelle (1) auf der flexiblen Leiterplatte (5) eingerichtet ist.

2. Anzeigevorrichtung (200) nach Anspruch 1, wobei ein Einfallswinkel, der durch das von der Lichtquelle (1) emittierte Licht und eine senkrecht zur Fingerabdruckberührungsfläche (21a) verlaufende Linie gebildet wird, im Bereich von 0 Grad bis 8 Grad liegt.

3. Anzeigevorrichtung (200) nach Anspruch 1 oder Anspruch 2, wobei die Lichtquelle (1) das Fingerabdruckmodul (2) umgibt.

4. Anzeigevorrichtung (200) nach einem der Ansprüche 1 bis 3, wobei die Lichtquelle (1) eine Vielzahl von Leuchtdioden (LEDs) umfasst, wobei die Vielzahl von LEDs das Fingerabdruckmodul (2) umgeben und gleichmäßig voneinander beabstandet sind.

5. Anzeigevorrichtung (200) nach Anspruch 4, wobei das Fingerabdruckmodul (2) einen rechteckigen Querschnitt aufweist, wobei der Querschnitt des Fingerabdruckmoduls zwei gegenüberliegende lange Seiten (L1) und zwei gegenüberliegende kurze Seiten (D1) umfasst, wobei die zwei kurzen Seiten (D1) zwischen den zwei langen Seiten (L1) verbunden sind.

6. Anzeigevorrichtung (200) nach Anspruch 5, wobei die Lichtquelle (1) sechs LEDs umfasst, wobei jede der langen Seiten (L1) mit zwei der LEDs bereitgestellt ist und jede der kurzen Seiten (D1) mit einer der LEDs bereitgestellt ist.

7. Anzeigevorrichtung (200) nach Anspruch 4, wobei das Fingerabdruckmodul (2) einen runden Querschnitt aufweist.

8. Anzeigevorrichtung (200) nach Anspruch 7, wobei die Lichtquelle (1) vier LEDs umfasst, die gleichmäßig an einer Seitenfläche des Fingerabdruckmoduls (2) eingerichtet sind.

9. Anzeigevorrichtung (200) nach einem der Ansprüche 1 bis 3, wobei die Lichtquelle (1) eine Vielzahl von Infrarotlichtquellen ist, wobei die Vielzahl von Infrarotlichtquellen das Fingerabdruckmodul (2) umgeben und gleichmäßig voneinander beabstandet sind.

10. Anzeigevorrichtung (200) nach Anspruch 9, wobei das Fingerabdruckmodul (2) einen Querschnitt aufweist, wobei der Querschnitt zwei gegenüberliegende lange Seiten (L1) und zwei gegenüberliegende kurze Seiten (D1) umfasst, wobei die zwei kurzen Seiten (D1) zwischen den zwei langen Seiten (L1) verbunden sind.

11. Anzeigevorrichtung (200) nach Anspruch 10, wobei die Lichtquelle (1) sechs Infrarotlichtquellen umfasst, wobei jede der langen Seiten (L1) mit zwei der Infrarotlichtquellen bereitgestellt ist und jede der kurzen Seiten (D1) mit einer der Infrarotlichtquellen bereitgestellt ist.

12. Anzeigevorrichtung (200) nach einem der Ansprüche 1 bis 11, wobei das Prisma (21), der Bildsensor (22) und die Fingerabdrucksteuerung (23) zum Bilden des Fingerabdruckmoduls (2) mit einem Epoxidgießkunststoff eingekapselt sind.

## Revendications

1. Dispositif d'affichage (200) comprenant :
un écran d'affichage (101) présentant une surface d'affichage (1011) et une surface arrière (1012) opposée à la surface d'affichage (1011), dans lequel la surface d'affichage (1011) présente une zone d'affichage (1011a),
la surface arrière (1012) définit un renfoncement (1012a), et une projection orthographique du renfoncement (1012a) sur l'écran d'affichage (101) tombe dans la zone d'affichage (1011a) ; et
un ensemble de reconnaissance d'empreinte digitale optique (100) reçu dans le renfoncement (1012a) de la surface arrière (1012) et comprenant :
un module d'empreinte digitale (2) comprenant un prisme (21), un capteur d'image (22) et un contrôleur d'empreinte digitale (23), le prisme (21), le capteur d'image (22) et le contrôleur d'empreinte digitale (23) étant encapsulés ensemble,
une source de lumière (1) disposée à l'extérieur du module d'empreinte digitale (2), dans lequel la source de lumière (1) est configurée pour émettre des lumières atteignant une surface supérieure du prisme, et
atteignant en outre la surface d'affichage au-dessus du prisme (1011), et une réflexion totale se produit lorsque les lumières atteignent une empreinte digitale à reconnaître sur la surface d'affichage (1011), et dans lequel des lumières formées par la réflexion totale traversent le prisme (21) et atteignent le capteur d'image (22) ; le capteur d'image (23) étant configuré pour acquérir une image d'empreinte digitale conformément aux lumières formées par la réflexion totale ; le contrôleur d'empreinte digitale (23) étant configuré pour reconnaître l'image d'empreinte digitale reçue à partir du capteur d'image (23) ;
une carte de circuit imprimé souple (5) ; et
un substrat (4) disposé sur la carte de circuit souple (5), dans lequel le module d'empreinte digitale (2) est encapsulé sur le substrat (4), et la source de lumière (1) est disposée sur la carte de circuit souple (5).

2. Dispositif d'affichage (200) selon la revendication 1, dans lequel un angle d'incidence formé par la lumière émise par la source de lumière (1) et une ligne perpendiculaire à la surface de toucher d'empreinte digitale (21a) est compris entre 0 et 8 degrés.

3. Dispositif d'affichage (200) selon la revendication 1 ou la revendication 2, dans lequel la source de lumière (1) entoure le module d'empreinte digitale (2).

4. Dispositif d'affichage (200) selon l'une quelconque des revendications 1 à 3, dans lequel la source de lumière (1) comprend une pluralité de diodes électroluminescentes (DEL), les DEL de la pluralité de DEL entourant le module d'empreinte digitale (2) et étant uniformément espacées les unes des autres.

5. Dispositif d'affichage (200) selon la revendication 4, dans lequel le module d'empreinte digitale (2) présente une section transversale de forme rectangulaire, la section transversale du module d'empreinte comprend deux côtés longs opposés (L1) et deux côtés courts opposés (D1), les deux côtés courts (D1) étant raccordés entre les deux côtés longs (L1).

6. Dispositif d'affichage (200) selon la revendication 5, dans lequel la source de lumière (1) comprend six DEL, chacun des côtés longs (L1) est doté de deux des DEL, et chacun des côtés courts (D1) est doté d'une des DEL.

7. Dispositif d'affichage (200) selon la revendication 4, dans lequel le module d'empreinte digitale (2) présente une section transversale de forme ronde.

8. Dispositif d'affichage (200) selon la revendication 7, dans lequel la source de lumière (1) comprend quatre DEL disposées uniformément sur une surface latérale du module d'empreinte digitale (2).

9. Dispositif d'affichage (200) selon l'une quelconque des revendications 1 à 3, dans lequel la source de lumière (1) est une pluralité de sources de lumière infrarouge, les sources de la pluralité de sources de lumière infrarouge entourant le module d'empreinte digitale (2) et étant uniformément espacées les unes des autres.

10. Dispositif d'affichage (200) selon la revendication 9, dans lequel le module d'empreinte digitale (2) présente une section transversale, la section transversale comprend deux côtés longs opposés (L1) et deux côtés courts opposés (D1), les deux côtés courts (D1) étant raccordés entre les deux côtés longs (L1).

11. Dispositif d'affichage (200) selon la revendication 10, dans lequel la source de lumière (1) comprend six sources de lumière infrarouge, chacun des côtés longs (L1) est doté de deux des sources de lumière infrarouge, et chacun des côtés courts (D1) est doté d'une des sources de lumière infrarouge.

12. Dispositif d'affichage (200) selon l'un quelconque des revendication 1 à 11, dans lequel le prisme (21), le capteur d'image (22), et le contrôleur d'empreinte digitale (23) sont encapsulés au moyen d'un plastique composé de moulage époxy pour former le module d'empreinte digitale (2).
